# EUROPEAN PATENT APPLICATION

(11) **EP 2 391 185 A2**
(43) Date of publication of application: **30.11.2011**
(21) Application number: 11158406.6
(22) Date of filing: 16.03.2011
(51) Int. Cl.: H05B 33/08

(54) **LED Light source module**

(30) Priority: 24.05.2010 TW 99116518
(71) Applicant: Delta Electronics, Inc., Taoyuan Hsien 333 (TW)
(72) Inventor: Chao, Yung-Hsiang, 333, Kuei San, Taoyuan Hsien (TW); Liao, Wen-Chia, 333, Kuei San, Taoyuan Hsien (TW); Shiue, Ching-Chuan, 333, Kuei San, Taoyuan Hsien (TW); Chen, Shih-Peng, 333, Kuei San, Taoyuan Hsien (TW); Wang, Horng-Jou, 333, Kuei San, Taoyuan Hsien (TW); Lin, Kun-Yueh, 333, Taoyuan Hsien (TW); Fang, Jia-Long, 333, Kuei San, Taoyuan Hsien (TW)
(74) Representative: 2K Patentanwälte Blasberg Kewitz & Reichel

(57) **Abstract**

A light source module is provided. The light source module includes a full wave rectifier, a constant current output integrated circuit (IC) and at least one high operating voltage light emitting diode (HVLED) die coupled between the constant current output IC and a ground. The full wave rectifier generates a rectified signal according to an alternating current (AC) power. The constant current output IC outputs a constant current signal according to the rectified signal. A brightness of the HVLED die is determined by the constant current signal.

## Description

### CROSS REFERENCE TO RELATED APPLICATIONS

This application claims priority of Taiwan Patent Application No. 099116518, filed on May 24, 2010, the entirety of which is incorporated by reference herein.

### BACKGROUND OF THE INVENTION

### Field of the Invention

The present invention is related to a light source module, and more particularly to a light source module which avoids flicker.

### Description of the Related Art

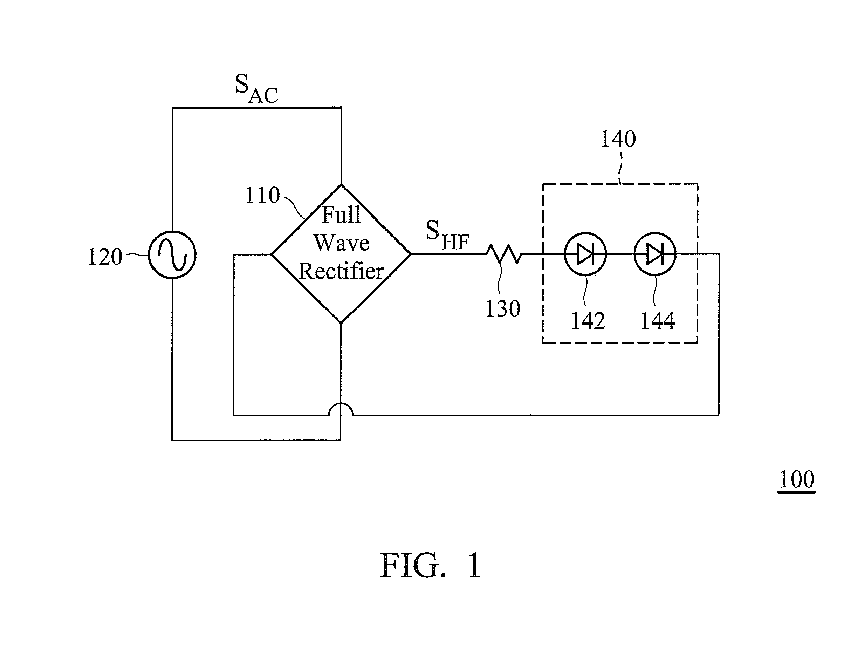

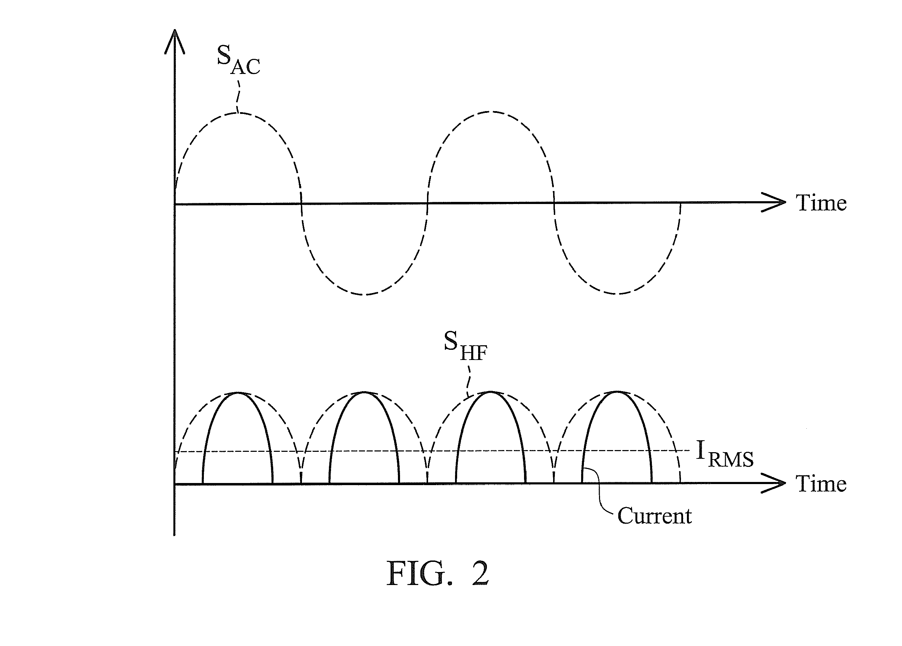

FIG. 1 shows a conventional light source module 100. In the light source module 100, an alternating current (AC) power 120 provides a power signal S_{AC} with positive and negative half waves to a full wave rectifier 110. Then, the full wave rectifier 110 rectifies the power signal S_{AC} to a power signal S_{HF} only with positive half waves, as shown in FIG. 2. Then, the power signal S_{HF} passes through a current-limiting resistor 130, and then is input to a light emitting diode (LED) module 140. In general, an operating voltage of an LED is ranged from 2 to 4 volts. Due to a voltage input to the LED module 140 being very large, a plurality of LEDs (e.g. LEDs 142, 144 of FIG. 1) are connected in series to disperse the input voltage. Thus, the difficulty in circuit layout and size of the light source module are increased.

Furthermore, when receiving the AC signal, the LED is sometimes operated above a root mean square (RMS) value of current I_{RMS}, as shown in FIG. 2 so as to decrease the efficiency of the LED and then influence the operating life of the LED. As described above, the amount of the LEDs connected in series need to be increased to disperse the input voltage, so once any one of LEDs is damaged, the voltage and current of the other LEDs will change. Thus, the operating life of the LED module is greatly decreased. In addition, each LED has its own light emitting color and light emitting angle. Therefore, no matter whether a single die package or multi-dies package is utilized to increase the number of the LEDs, the LEDs may interfere with each other to affect the light emitted from the whole light source. In addition, when any one of LEDs is damaged, the voltage and current of other LEDs will change, such that the brightness of the other LEDs will be affected. At this time, if the other LEDs do not emit the same type of light, the combination light of the whole light source will deviate from the original setting value, so that it would be difficult to steadily control the light output of the LEDs so as to increase the difficulty of the utilization of the LED module.

In general, the AC power provided in rush hour and off-peak time has a small variation, that is, the AC power provided is not stable. The small variation of voltage or current may cause the LEDs to flicker and then cause the users uncomfortable.

Therefore, there is a need to provide a light source module with high efficiency and stable light output.

### BRIEF SUMMARY OF THE INVENTION

Light source modules are provided. According to one exemplary embodiment of the invention, a light source module includes a full wave rectifier, a constant current output integrated circuit (IC) and at least one high operating voltage light emitting diode (HVLED) die coupled between the constant current output IC and a ground. The full wave rectifier generates a rectified signal according to an alternating current (AC) power. The constant current output IC outputs a constant current signal according to the rectified signal. A brightness of the HVLED die is determined by the constant current signal.

Furthermore, according to another exemplary embodiment of the invention, a light source module includes a full wave rectifier, at least one constant current output IC, a plurality of HVLED dies coupled to a ground and a plurality of voltage reduction units separately coupled between the constant current output IC and the corresponding HVLED die. The full wave rectifier generates a rectified signal according to an AC power. The at least one constant current output IC output at least one constant current signal according to the rectified signal. A brightness of each of the HVLED dies is determined by the constant current signal and the corresponding voltage reduction unit.

A detailed description is given in the following embodiments with reference to the accompanying drawings.

### BRIEF DESCRIPTION OF DRAWINGS

The invention can be more fully understood by reading the subsequent detailed description and examples with references made to the accompanying drawings, wherein:

FIG. 1 shows a conventional light source module;

FIG. 2 shows a waveform diagram illustrating the signals of the conventional light source module of FIG. 1;

FIG. 3 shows a light source module according to an embodiment of the invention;

FIG. 4 shows a light source module according to another embodiment of the invention;

FIG. 5A shows a light source module according to another embodiment of the invention;

FIG. 5B shows a light source module according to another embodiment of the invention;

FIG. 6A shows a light source module according to another embodiment of the invention;

FIG. 6B shows a light source module according to another embodiment of the invention;

FIG. 7A shows a light source module according to another embodiment of the invention;

FIG. 7B shows a light source module according to another embodiment of the invention;

FIG. 7C shows a light source module according to another embodiment of the invention;

FIG. 8 shows a diagram illustrating a relationship between voltage and a Lumen change rate;

FIG. 9A shows a light source module according to another embodiment of the invention;

FIG. 9B shows a light source module according to another embodiment of the invention; and

FIG. 10 shows a light source module according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

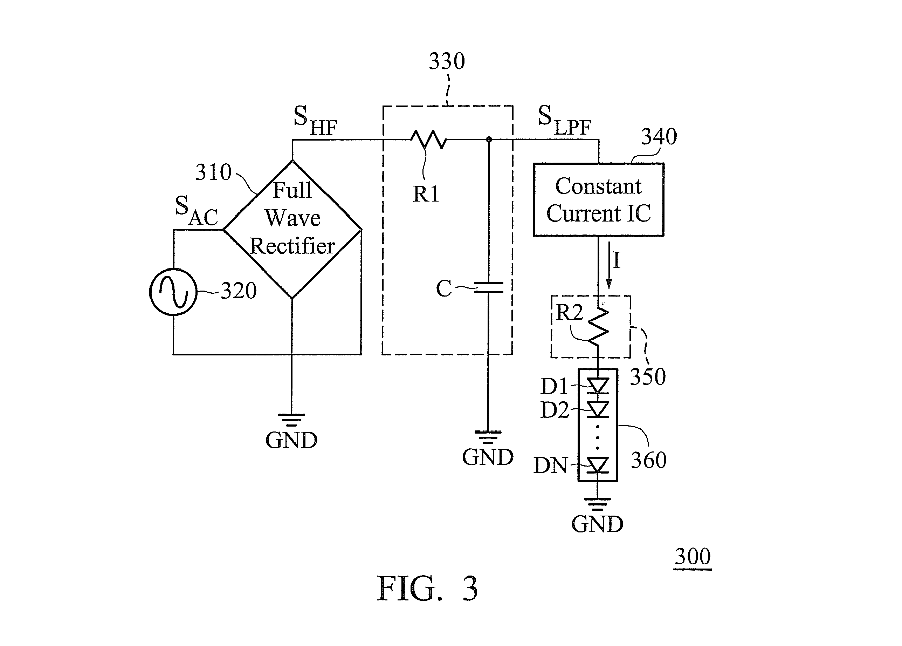

FIG. 3 shows a light source module 300 according to an embodiment of the invention. The light source module 300 includes a full wave rectifier 310, an alternating current (AC) power 320, a low pass filter (LPF) 330, a constant current integrated circuit (IC) 340, a voltage reduction unit 350 and a high operating voltage light emitting diode (HVLED) die 360. The full wave rectifier 310 rectifies an AC signal S_{AC} provided by the AC power 320 to a signal S_{HF}. The LPF 330 is coupled between the full wave rectifier 310 and the constant current output IC 340 for filtering the signal S_{SH} to generate a signal S_{LPF}. In the embodiment, the LPF 330 includes a resistor R1 and a capacitor C, wherein the resistor R1 is coupled between the full wave rectifier 310 and the constant current output IC 340 and the capacitor C is coupled between the resistor R1 and a ground. According to the signal S_{LPP}, the constant current output IC 340 may provide a constant current signal I to the HVLED die 360 via the voltage reduction unit 350, wherein the voltage reduction unit 350 is utilized for dropping a voltage of the constant current signal I, and a brightness of the HVLED die 360 is determined by the constant current signal I. In the embodiment, the voltage reduction unit 350 may be a resistor R2. In another embodiment, the voltage reduction unit 350 may be a Zener diode. For the HVLED die 360, the constant current signal I is a fixed input current that does not change with the AC signal S_{AC}. Thus, when the AC signal S_{AC} is unstable due to different locations or peak loading periods, the constant current signal I is still kept at a fixed current value, such that no light flicker occurs for the HVLED die 360. In one embodiment, the constant current output IC 340 is an operating IC with a fixed output current, wherein the current value of the constant current signal I is larger than 3mA. In addition, in FIG. 3, the HVLED die 360 includes a plurality of light emitting diodes (LEDs) D1-DN connected in series, wherein the HVLED die 360 has a high operating voltage, for example, larger than 10 volts. In other embodiments, the HVLED die 360 is an LED die that includes a plurality of LEDs D1-DN connected in series, in parallel or combinations thereof. A light emitting wavelength of the HVLED die 360 is ranged from 200nm to 800nm.

In general, in order to achieve various brightness' and combination colors, the operating voltages of the plurality of HVLED dies may be arranged in series and/or in parallel arbitrarily, such that the operating voltage difference between the HVLED dies may be equal to or smaller than 1 volt. However, the total operating voltage of all HVLED dies will rise due to increase in die numbers of the HVLEDs. In addition, the current flowing through the HVLED dies are slowly decreased under fixed power output when the operating voltages of the HVLED dies are increased; thus, total Lumen value decreases.

Furthermore, if the operating voltages are too high and the AC power is unstable, a light flicker phenomenon will occur for the HVLED dies. Therefore, in order to provide a stable operation range, the upper limit of the operating voltages must be controlled under a specific voltage value, wherein the specific voltage value is determined according to actual applications. To be noted, when the specification of the AC power is changed, the power provided by the light source modules of the embodiments of the invention also will change and the operating voltages of the HVLED dies will change, too. Therefore, under a specific AC power condition, the operating voltages of the HVLED dies are controlled to be at least below a voltage value, thereby preventing the light flicker phenomenon of the HVLED caused by unstable AC power.

In other embodiments, in order to obtain different color temperatures, the light source needs to be composed of different combinations of the HVLEDs with various wavelengths. By adjusting the combinations of the HVLEDs with various wavelengths, various color temperatures can be obtained. For example, in order to obtain better efficiency and color rendering property of the light source at a specific color temperature, the HVLEDs with various wavelengths are collocated to form the light source. Specifically, the higher efficiency and a better color rendering property of the light source can be achieved by using the combinations of the HVLEDs with various light emitting wavelengths. However, different operating voltages and light output powers need to be considered for the HVLED dies with various light emitting wavelengths. Thus, the HVLED combinations must be collocated to obtain the best efficiency and color rendering property. Therefore, at a specific color temperature, the best efficiency and color rendering property are obtained by adjusting the output light power of the combinations of the HVLEDs with various light emitting wavelengths.

In a specific AC power, the total operating voltage of a plurality of HVLED dies must be smaller than 1.4 times of a voltage value of the AC power so as to avoid flicker caused by unstable AC power.

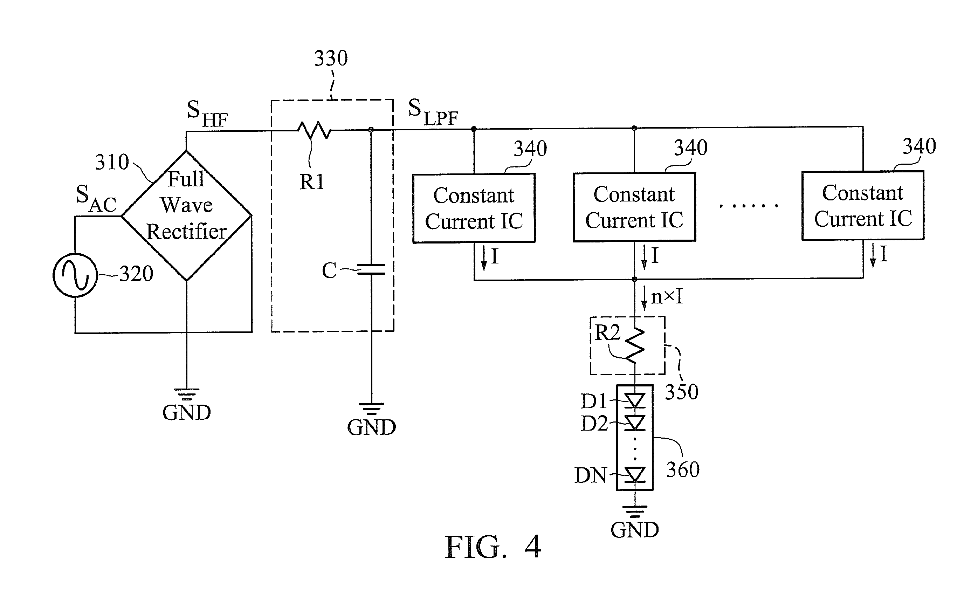

In addition, a plurality of constant current output ICs 340 are connected in parallel so as to provide larger operating current to the HVLED die 360, as shown in FIG. 4. Thus, the brightness of the HVLED die 360 is determined by the constant current signals I generated from the all constant current output ICs 340.

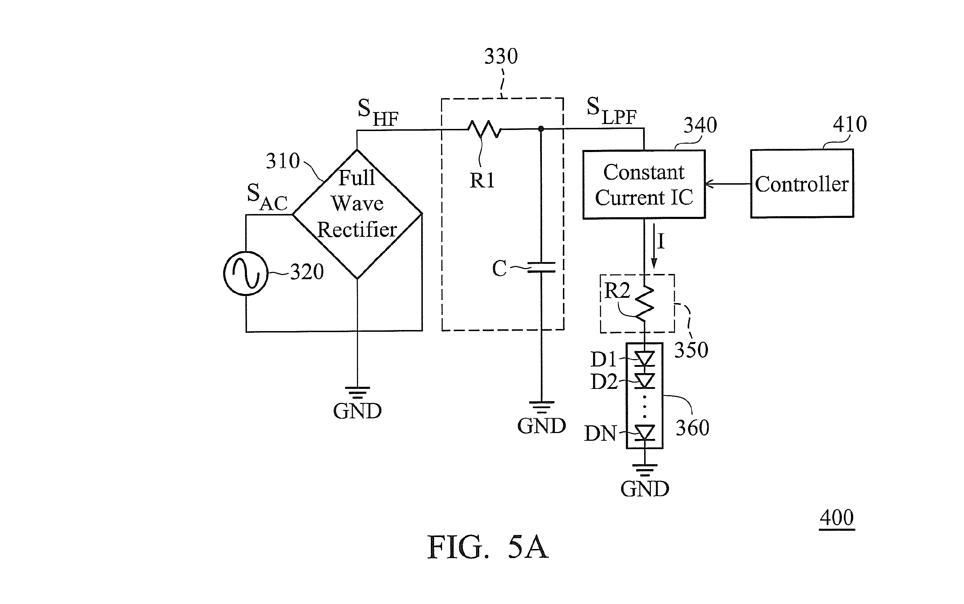

FIG. 5A shows a light source module 400 according to another embodiment of the invention. Compared to the light source module 300 of FIG. 3, the light source module 400 further includes a controller 410 coupled to the constant current output IC 340. In the light source module 400, the current value of the constant current signal I provided by the constant current output IC 340 is adjusted by the controller 410, thereby the brightness of the HVLED die 360 may change and then be set to a preset brightness. Furthermore, in one embodiment, a plurality of the HVLED dies 360 may be used to be connected in series, in parallel or other modes so as to form various HVLED combinations.

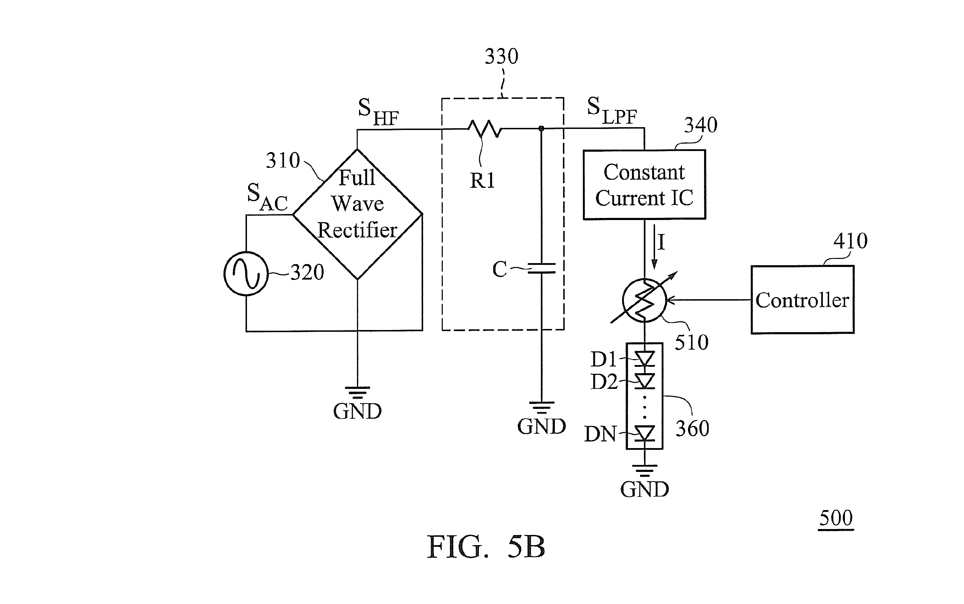

FIG. 5B shows a light source module 500 according to further another embodiment of the invention. In the light source module 500, a variable resistor 510 is coupled between the constant current output IC 340 and the HVLED die 360. Except for the voltage reduction, a resistance value of the variable resistor is adjusted by the controller 410 so as to change the current value of the operating current to be input to the HVLED die 360. Thus, the brightness of the HVLED die 360 may change to a preset brightness. In addition, in one embodiment, a plurality of the HVLED dies 360 may be used to be connected in series, in parallel or other modes so as to form various HVLED combinations.

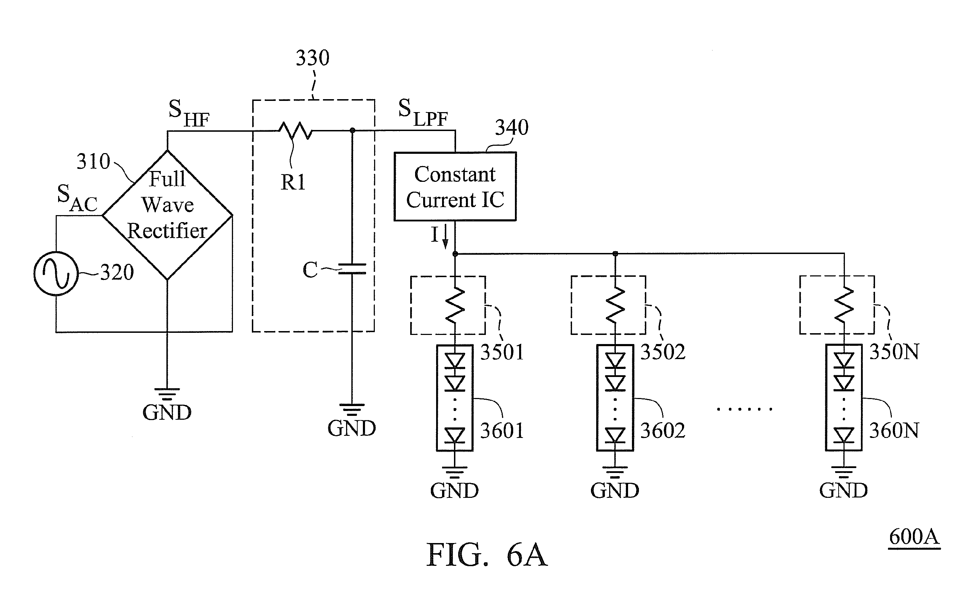

FIG. 6A shows a light source module 600A according to further another embodiment of the invention. Compared to the light source module 300 of FIG. 3, the light source module 600A has N voltage reduction units 3501-350N and N HVLED dies 3601-360N, wherein each of the voltage reduction units 3501-350N is coupled between the constant current output IC 340 and the corresponding HVLED die. For example, the voltage reduction unit 3501 is coupled between the constant current output IC 340 and the HVLED die 3601, and the voltage reduction unit 3502 is coupled between the constant current output IC 340 and the HVLED die 3602. In the embodiment, each of the voltage reduction units 3501-350N is a resistor. In addition, different operating currents are respectively provided to the HVLED dies 3601-360N by selecting the voltage reduction units 3501-350N with various resistance values so as to obtain different brightness for the HVLED dies 3601-360N. For example, the HVLED dies 3601 and 3602 have the same brightness when the resistance values of the voltage reduction units 3501 and 3502 are the same. On the contrary, the HVLED dies 3601 and 3602 have different brightness when the resistance values of the voltage reduction units 3501 and 3502 are different. Moreover, in one embodiment, the HVLED dies 3601-360N may have different colors, respectively. Thus, the different colors may be combined by the light source module 600A.

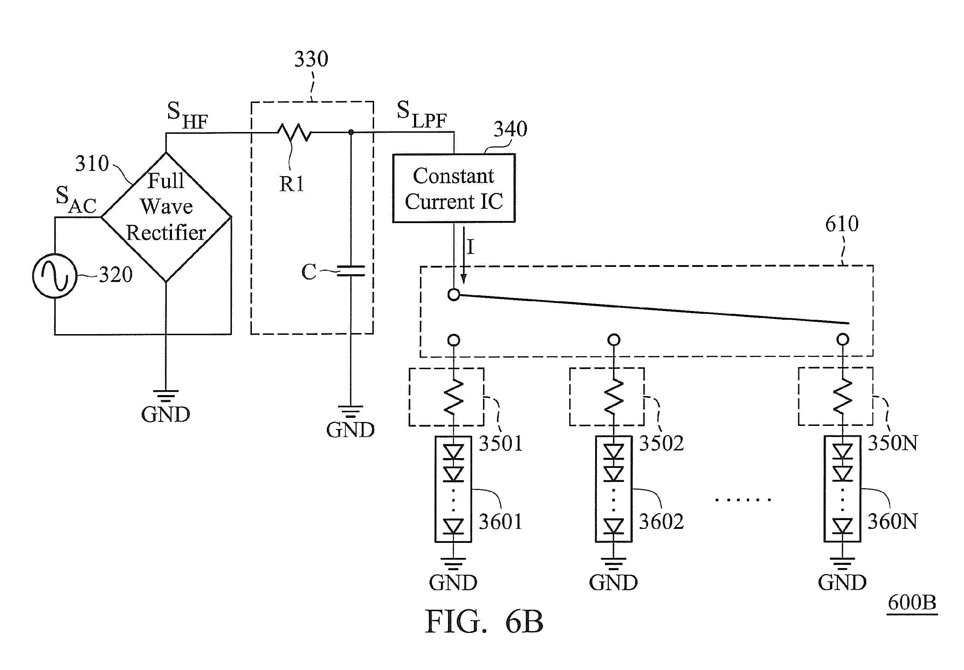

FIG. 6B shows a light source module 600B according to further another embodiment of the invention. Compared to the light source module 600A of FIG. 6A, the light source module 600B further includes a switch 610, wherein the switch 610 may be a mechanical or electronic switch. In the light source module 600B, the switch 610 selectively couples the constant current output IC 340 to one of the N voltage reduction units 3501-350N so as to provide the constant current signal I to the HVLED die corresponding to the one of the N voltage reduction units 3501-350N (i.e. the voltage reduction unit coupled to the constant current output IC 340 via the switch 610). For example, as shown in FIG. 6B, the constant current output IC 340 is coupled to the voltage reduction unit 350N via the switch 610, thereby the constant current output IC 340 may provide the constant current signal I to the HVLED die 360N. In one embodiment, the HVLED dies 3601-360N have different specifications (e.g. brightness, color temperature and so on), respectively. For example, the HVLED dies 3601, 3602 and 360N have different brightness and correspond to a red color, a green color and a blue color, respectively. Therefore, by controlling the switch 610, the light source module 600B may be selectively switched between the HVLED dies 3601-360N for providing different brightness' and different light emitting wavelengths.

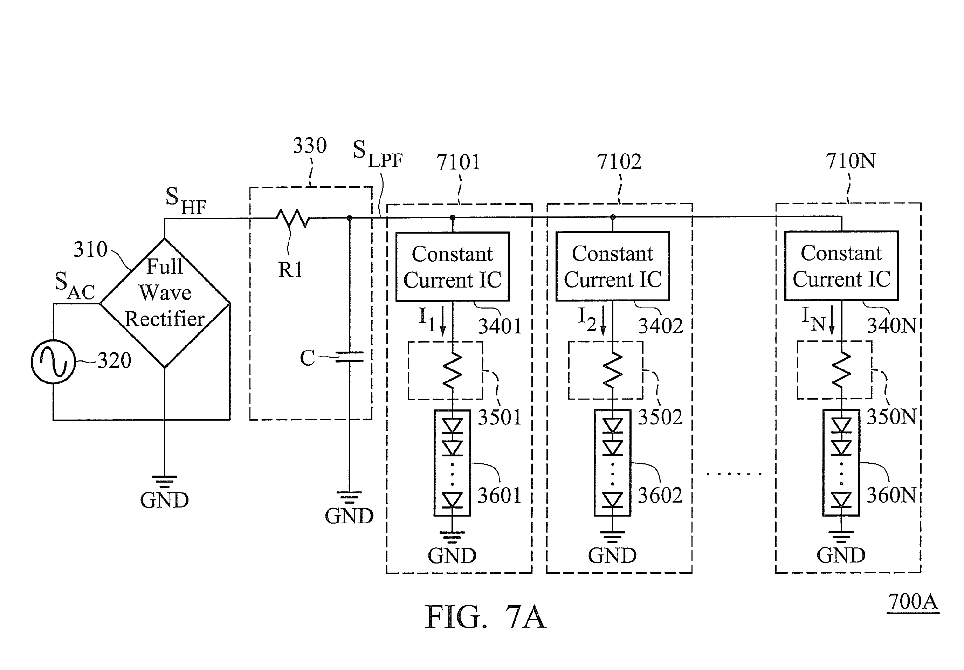

FIG. 7A shows a light source module 700A according to further another embodiment of the invention. The light source module 700A includes a plurality of light emitting devices 7101-710N connected in parallel. Each of the light emitting devices 7101-710N includes a constant current output IC (e.g. 3401, 3402 ...or 340N), a voltage reduction unit (e.g. 3501, 3502 ...or 350N) and an HVLED die (e.g. 3601, 3602 ...or 360N). In the light source module 700A, each of the constant current output ICs of the light emitting devices may provide the same or different constant current signal I to the corresponding HVLED die. For example, if the constant current output ICs 3401 and 3402 provide the constant current signals I with the same current values to the HVLED dies 3601 and 3602, respectively, the HVLED dies 3601 and 3602 may have the same brightness. On the contrary, if the constant current output ICs 3401 and 3402 provide the constant current signal I1 and the constant current signal I2 different from I1 to the HVLED dies 3601 and 3602, respectively, the brightness of the HVLED dies 3601 and 3602 are separately determined by the constant current signals I1 and I2, i.e. the brightness of the HVLED dies 3601 and 3602 are different. Furthermore, in the light source module 700A, the HVLED dies 3601-360N may have the same or different light emitting colors. As described above, in each light emitting device, a plurality of constant current output ICs or voltage reduction units plus a plurality of HVLED dies may be used to provide various brightness' or various colors for light emitting effects.

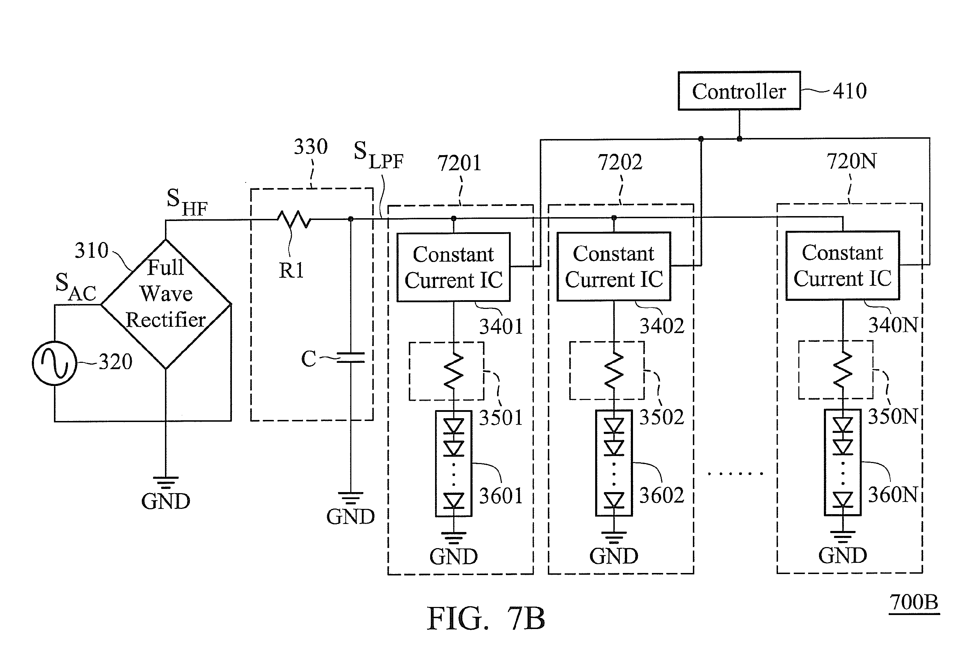

FIG. 7B shows a light source module 700B according to another embodiment of the invention. Compared to the light source module 700A of FIG. 7A, the constant current output ICs 3401-340N of the light emitting devices 7201-720N in the light source module 700B may dynamically adjust the current values of the constant current signals I thereof via the controller 410, such that the brightness of the HVLED dies 3601-360N may change and be set to expectative brightness, respectively.

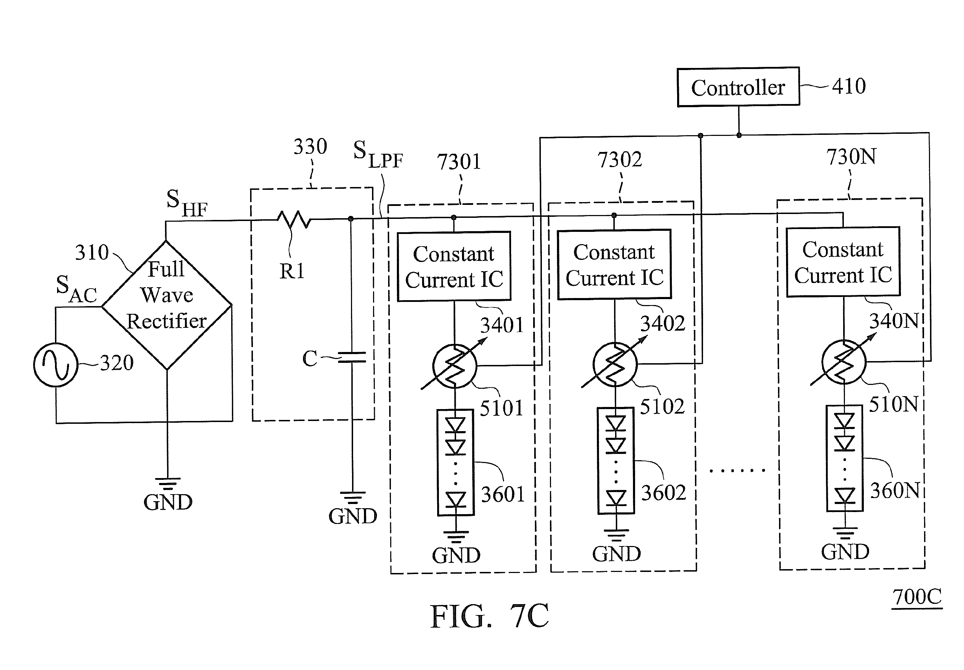

FIG. 7C shows a light source module 700C according to another embodiment of the invention. In the light source module 700C, each of the voltage reduction units 5101-510N of the light emitting devices 7301-730N includes a variable resistor. Except for the voltage reductions, the resistance values of the variable resistors 5101-510N are adjusted by the controller 410 so as to change the current values of the operating currents to be input to the HVLED dies 3601-360N. Thus, the brightness of the HVLED dies 3601-360N may change and be set to an expectative brightness, respectively.

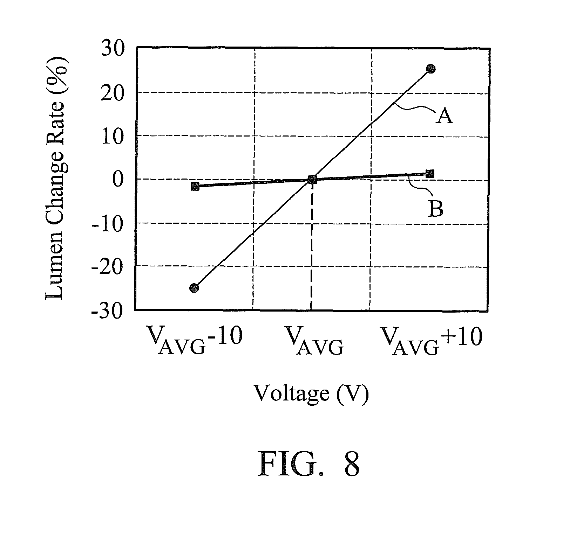

FIG. 8 shows a diagram illustrating a relationship between voltage and a Lumen change rate, which shows the influence on the Lumen change rate caused by voltage variation. In FIG. 8, curve A represents a Lumen change rate of a conventional light source module when the AC voltage is changed (e.g. V_{AVG}±10 volts), and curve B represents a Lumen change rate of a light source module according to the embodiments of the invention when the AC voltage is changed. The Lumen change rate of the conventional light source module is quite high (e.g. ±25%), thus a light flicker phenomenon will occur easily. On the contrary, the Lumen change rate of the light source module according to the embodiments of the invention is very small, thus no light flicker phenomenon will occur. According to the embodiments of the invention, an LED light source with stable light output and high efficiency may be obtained without additional high costs or complex circuits to decrease the voltage of the AC power. Furthermore, replacing a plurality of LEDs with an HVLED die may reduce manufacturing costs and size of a light source module.

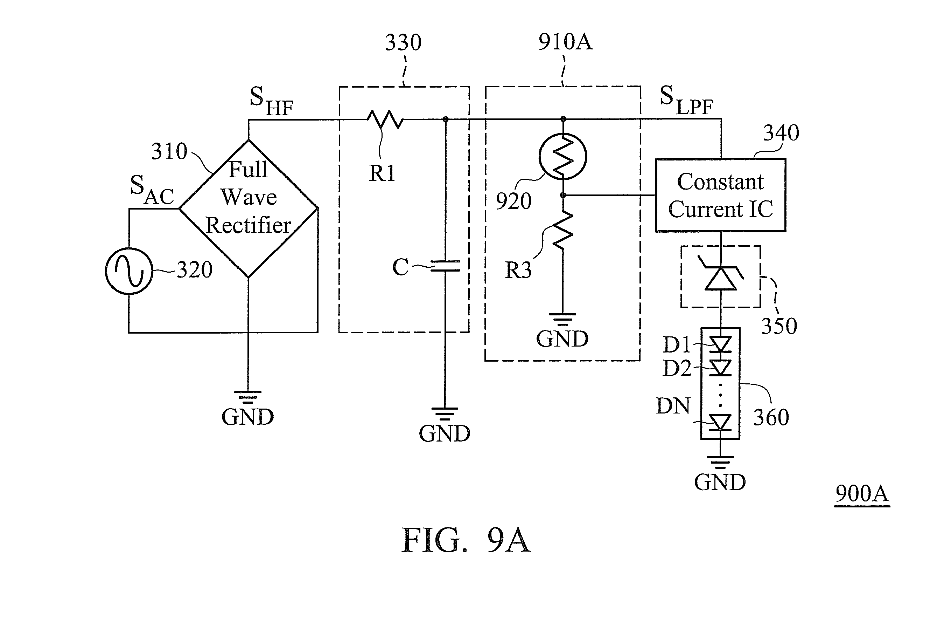

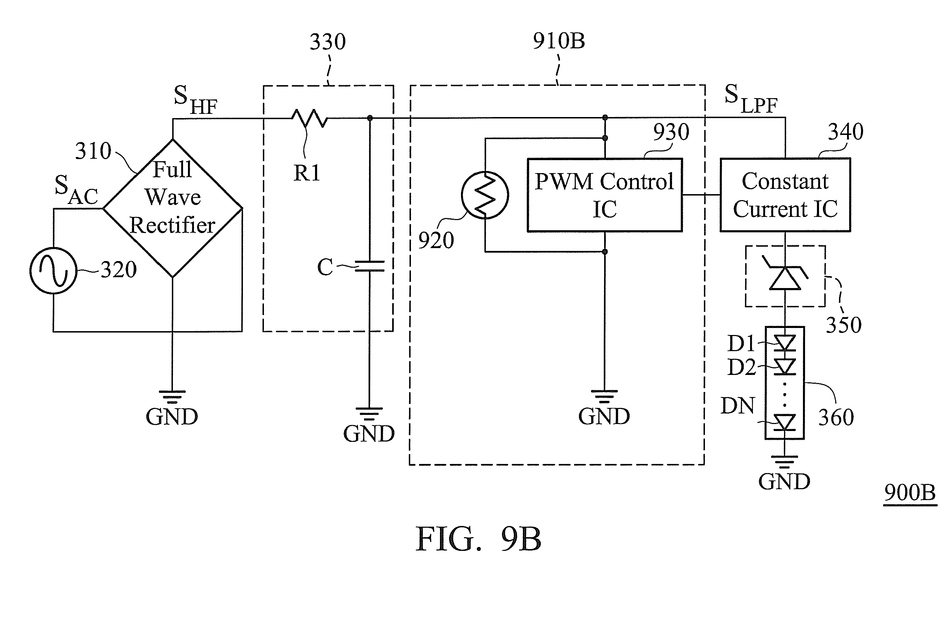

FIG. 9A shows a light source module 900A according to another embodiment of the invention. Compared to the light source module 300 of FIG. 3, the light source module 900A further includes a thermal compensation operating current unit 910A which includes a thermal detecting resistor 920 and a resistor R3. The thermal compensation operating current unit 910A is coupled to the constant current output IC 340 for detecting a temperature variation of the HVLED die 360 and changing resistance value of the thermal detecting resistor 920 to feedback to the constant current output IC 340 so as to change the current value of the constant current signal that is output to the HVLED die 360. FIG. 9B shows a light source module 900B according to another embodiment of the invention. In the light source module 900B, a thermal compensation operating current unit 910B includes the thermal detecting resistor 920 and a pulse width modulation (PWM) control IC 930.

In general, when operation time and temperature factors are increased, efficiency of an LED die will decrease gradually such that a brightness of the LED die may attenuate. Therefore, in order to avoid obvious brightness variation caused by decreased efficiency of the HVLED die, a thermal compensation operating current unit is used to detect a operation temperature of an HVLED die and compensate a operating current thereof, such that the brightness of the HVLED die is not decreased due to time and operation temperature factors. Therefore, the utilization of the thermal compensation operating current unit may keep the LEDs with various light emitting wavelengths at the same brightness under long periods of time such that all of the light sources have stable brightness and color temperature.

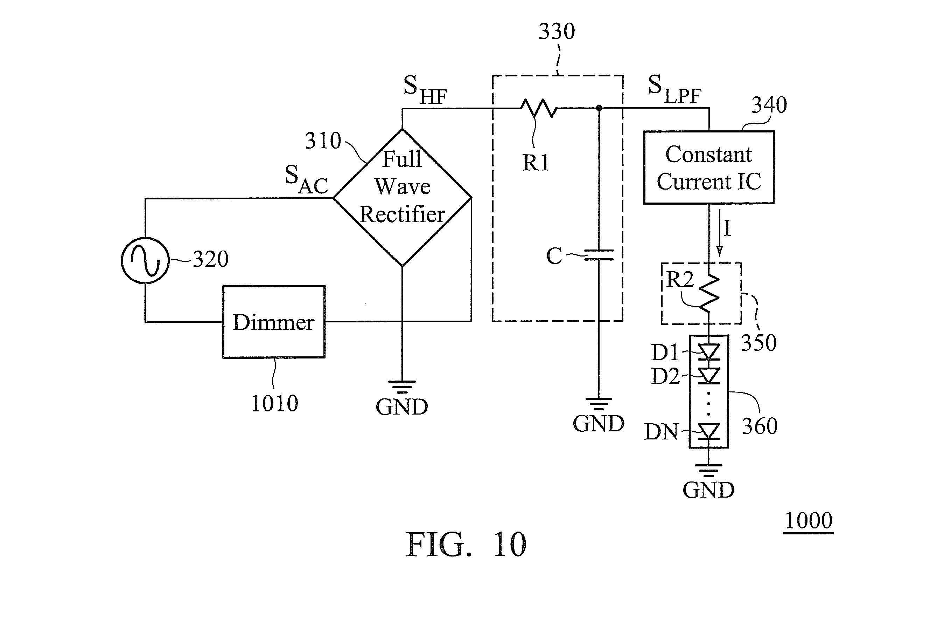

FIG. 10 shows a light source module 1000 according to another embodiment of the invention. Compared to the light source module 300 of FIG. 3, the light source module 1000 further includes a dimmer 1010 which includes a triode AC switch (TRIAC) and a diode AC switch (DIAC). The TRIAC is a thyristor, which uses a small current/voltage to control a larger current/voltage, and has the advantages such as a small size, low power consumption, high efficiency and rapid switching. Specifically, the dimmer 1010 may change a current of the light source module 1000 to obtain stable dimming light.

As will become apparent to the person skilled in the art, the individual features of the embodiments according to appended claims 1 to 8 and appended claims 9 to 16, respectively, can be independently combined with the respective features of the claims directed to the respective other embodiment. Accordingly, also such embodiments shall be covered by the following claims. While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A light source module comprising:
a full wave rectifier (310) generating a rectified signal according to an alternating current (AC) power;
a constant current output integrated circuit (IC) (340) outputting a constant current signal according to the rectified signal; and
at least one high operating voltage light emitting diode (HVLED) die (360) coupled between the constant current output IC and a ground, wherein a brightness of the HVLED die is determined by the constant current signal.

2. The light source module as claimed in claim 1, further comprising:
a low pass filter (330) coupled between the full wave rectifier (310) and the constant current output IC (340) for filtering the rectified signal, and comprising a resistor (R1) coupled between the full wave rectifier and the constant current output IC, and a capacitor (C) coupled between the resistor and the ground.

3. The light source module as claimed in claim 1 or 2, further comprising:
a voltage reduction unit (350) coupled between the constant current output IC and the HVLED die, and regulating the constant current signal,
wherein an operating voltage of the HVLED die (360) is larger than 10 volts.

4. The light source module as claimed in any of the preceding claims, wherein the HVLED die (360) comprises a plurality of light emitting diodes (D1-DN), and a light emitting wavelength of the HVLED die is ranged from 200nm to 800nm.

5. The light source module as claimed in any of the preceding claims, further comprising:
a first controller (410) coupled to the constant current output IC (340) and adjusting a current value of the constant current signal output by the constant current output IC so as to control the brightness of the HVLED die (360), wherein the current value of the constant current signal is larger than 3 mA.

6. The light source module as claimed in any of the preceding claims, further comprising:
a variable resistor (510) coupled between the constant current output IC and the HVLED die; and
a second controller (410) coupled to the variable resistor and adjusting a resistance value of the variable resistor so as to control the brightness of the HVLED die.

7. The light source module as claimed in any of the preceding claims, further comprising:
a thermal compensation operating current unit (910A) coupled between the full wave rectifier (310) and the constant current output IC (340) and comprising a thermal detecting resistor,
wherein the thermal compensation operating current unit detects a temperature variation of the HVLED die (360) and adjusts a resistance value of the thermal detecting resistor to send a feedback signal to the constant current output IC so as to change a current value of the constant current signal.

8. The light source module as claimed in any of the preceding claims, further comprising:
a triode AC switch (TRIAC) coupled between the AC power (320) and the full wave rectifier (310) and changing a current value of the constant current signal to adjust the brightness of the HVLED die.

9. A light source module comprising:
a full wave rectifier (310) generating a rectified signal according to an AC power;
at least one constant current output IC (340) outputting at least one constant current signals according to the rectified signal;
a plurality of HVLED dies (3601-360N) coupled to a ground; and
a plurality of voltage reduction units (3501-350N; 5501-550N) respectively coupled between the constant current output IC and the corresponding HVLED die,
wherein a brightness of each of the HVLED dies is determined by the constant current signal and the corresponding voltage reduction unit.

10. The light source module as claimed in claim 9, further comprising:
a low pass filter (330) coupled between the full wave rectifier (310) and the constant current output IC (340) for filtering the rectified signal, and comprising a resistor (R1) coupled between the full wave rectifier and the constant current output IC, and a capacitor (C) coupled between the resistor and the ground.

11. The light source module as claimed in claim 9 or 10, wherein an operating voltage of each of the HVLED dies (3601-360N) is larger than 10 volts, an operating voltage difference between the HVLED dies is equal to or smaller than 1 volt, and a total operating voltage of the HVLED dies is smaller than 1.4 times of a voltage value of the AC power.

12. The light source module as claimed in any of claims 9 to 11, further comprising:
a switch (610) selectively coupling the constant current output IC to one of the voltage reduction units (3501-350N; 5501-550N) so as to provide the constant current signal to the HVLED die corresponding to the one of the voltage reduction units.

13. The light source module as claimed in any of claims 9 to 12, further comprising a plurality of constant current output ICs (3401-340N) coupled to the corresponding voltage reduction units (3501-350N; 5501-550N), respectively so as to provide the constant current signal to the corresponding the HVLED die (3601-360N).

14. The light source module as claimed in claim 13, further comprising:
a first controller (410) coupled to the constant current output ICs (3401-340N) and adjusting a current value of the constant current signal output by each of the constant current output ICs so as to control the brightness of each of the HVLED die.

15. The light source module as claimed in claim 13 or 14, wherein each of the HVLED dies (3601-360N) comprises a plurality of light emitting diodes, the brightness' of the HVLED dies are different, a light emitting wavelength of each of the HVLED dies is ranged from 200nm to 800nm, and an operating voltage difference between the HVLED dies is equal to or smaller than 1 volt.

16. The light source module as claimed in any of claims 9 to 15, further comprising a second controller (410), wherein each of the voltage reduction units (5501-550N) comprises a variable resistor, and the second controller is coupled to the variable resistors for adjusting a resistance value of each of the variable resistors so as to control the brightness of each of the HVLED die (3601-360N).
